Europäisches Patentamt

**European Patent Office**

**Office européen des brevets**

(19)

(11) Publication number: **0 079 568**
**A1**

(12)  # EUROPEAN PATENT APPLICATION

(21) Application number: **82110317.3**

(22) Date of filing: **09.11.82**

(51) Int. Cl.³: **G 01 N 31/08**

(30) Priority: **16.11.81 GB 8134514**

(43) Date of publication of application:
**25.06.83 Bulletin 83/21**

(84) Designated Contracting States:
**CH DE FR GB LI**

(71) Applicant: **KONTRON-HOLDING AG**
**Bernerstrasse Süd 169**
**CH-8048 Zürich(CH)**

(72) Inventor: **Tompkins, David John**
**417 Staines Road West**
**Ashford Middlesex(GB)**

(74) Representative: **Körber, Wolfhart, Dr. et al,**
**Patentanwälte Dipl.Ing.H.Mitscherlich,**
**Dipl.Ing.K.Gunschmann, Dr.rer.nat.W.Körber,**
**Dipl.Ing.J.Schmidt-Evers Steinsdorfstrasse 10**
**D-8000 München 22(DE)**

(54) Improvements in or relating to heating apparatus.

(57) Heating apparatus comprises a heat conducting block (1) formed with a cavity (2) to accept a member to be heated, for example a column of a column chromatograph. Resilient heat conducting means (3) are provided in the cavity in contact with the walls of the cavity and resiliently support and contact the member to-be heated, so as to ensure in use of the apparatus, heat transfer between the block and the member to be heated.

Fig.1

EP 0 079 568 A1

Ref.6800/21

"Improvements in or relating to heating apparatus"

THIS INVENTION relates to improvements in or relating to heating apparatus wherein a member to be heated is mounted within a cavity formed in a heat conducting block which is heated, for example, electrically.

In particular, this invention relates to heating apparatus for a column chromatograph.

Conventionally, in order to ensure good heat transfer with a minimum temperature differential between a chromatograph column and its heating block, the cavity formed in the heating block must be accurately machined to fit precisely the column to be used so as to ensure good heat conduction from the block to the column. However, the necessity for such a precise fit requires that a separate heating block be provided for each different shape or size of column. It has been proposed to provide heat conducting solid inserts in the cavity to adapt the cavity to fit a particular column. However, such an arrangement requires the provision of numerous differently shaped inserts.

It is an object of the invention to provide heating apparatus of the kind described above wherein the cavity formed in the heat conducting block is capable of accommodating a wide range of sizes and shapes of members to be heated, in particular chromatograph columns.

According to one aspect of the invention, there is provided heating apparatus comprising a heat conducting block formed with a cavity to accept a member to be heated, means for heating the block and resilient heat conducting means in the cavity for resiliently supporting the member to be heated in the cavity, the resilient heat conducting means being adapted to contact the wall of the cavity and the member to be heated and

Bu/7.10.82

serving, in use of the apparatus, to conduct heat from the block to the member to be heated.

According to a second aspect of the invention, there is provided heating apparatus for a column chromatograph, comprising a heat conducting block formed with an elongate cavity to accept a column of the chromatograph, means for heating the block, and resilient heat conducting means in the cavity for resiliently supporting the column in the cavity, the resilient heat conducting means being adapted to contact the wall of the cavity and the column and serving, in use of the apparatus, to conduct heat from the block to the column.

Desirably, the resilient heat conducting means are so formed as to contact the member to be heated at evenly spaced portions on the surface of the member to ensure even heating.

In a preferred embodiment, the resilient heat conducting means form a resilient cradle for the member to be heated and retaining means are associated with the resilient heat conducting means to press the member to be heated into the cradle. Preferably, a portion of the wall of the cavity is removable to form an opening in the cavity wall and the or the associated retaining means are provided on the removable portion of the cavity wall. Alternatively, the retaining means may comprise a portion of the cavity wall which is removable to form an opening in the cavity wall and which, in use of the apparatus, presses the member to be heated into the associated resilient cradle.

The resilient heat conducting means may comprise a pair of plate springs having tongues which interleave to form the resilient cradle and conveniently the pair of plate springs are held in place in grooves formed in the cavity wall of the cavity.

Generally, where the heating apparatus embodying the invention is used for heating a column of a chromatograph, the column extends parallel to the removable portion of the associated cavity wall. Preferably, the length of the pair of plate springs is adjustable to accommodate columns of different sizes.

Conveniently one or more further cavities are formed in the heat conducting block, each further cavity being provided with resilient heat conducting means for resiliently supporting and contacting a respective member to be heated, for example a column of a column chromatograph. Preferably, the cavities are elongate and formed parallel to one another in the heat conducting block.

Usually, means for heating the heat conducting block are carried by the block itself.

In order that the invention may be more readily understood, an embodiment thereof will now be described, by way of example, with reference to the accompanying drawing, in which:

FIGURE 1 is a cross-sectional view of heating apparatus embodying the invention, in which a column of a column chromatograph is to be heated; and

FIGURE 2 shows in plan view two plate springs which, in use, form the resilient heat conducting means of the apparatus of Figure 1.

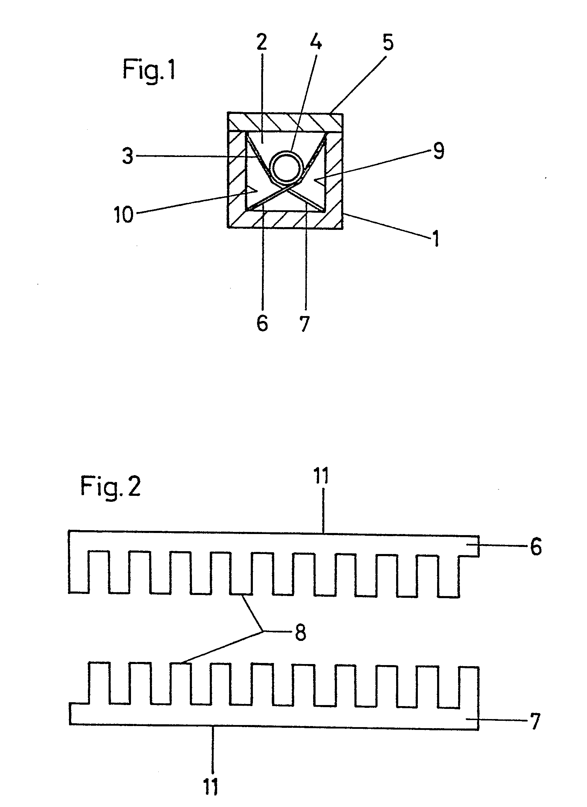

Referring now to the drawing, Figure 1 is a cross-sectional view of heating apparatus embodying the invention, comprising a heat conducting block 1 formed with a cavity 2 in which are provided resilient heat conducting means 3 constructed and arranged to contact the wall of the cavity 2 and resiliently support and contact a column 4 of a column chromatograph for use in, for example, liquid chromatography. Heating means, for example electrical heating means, (not shown) are carried by, or associated with, the heat conducting block 1.

As shown in Figure 1, the heat conducting block 1 comprises an elongate rectangular box made of, for example, aluminium or a similarly highly conductive material and the cavity 2 formed therein is in the form of a rectangular channel extending along the longitudinal axis of the block 1. One longitudinal wall 5 of the block 1 is removable in order to allow a column to be placed inside the block and is held in place by screws or, clamps or other suitable fastening means ensuring good heat transfer throughout the block.

As can be seen from Figure 2, the resilient heat conducting means 3 comprise two plate springs 6 and 7 made, for example, from beryllium copper. Each plate spring is in the form of an elongate strip having a plurality of transversely extending tongues 8, ten such tongues being provided on each spring in the particular embodiment illustrated. The two plate springs are arranged in the cavity such that the tongues 8 interleave to form a cradle extending along the length of the heat conducting block. Thus, the longitudinal edge 11 of one spring 6 abuts the top edge of one side wall 9 of the cavity 2 while the free ends of the tongues 8 of the spring 6 abut the bottom or lower edge of the opposite side wall 10. The other spring 7 is similarly arranged so that the longitudinal edge 11 of the spring 7 abuts the top edge of the side wall 10 and the tongues of the spring abut the lower edge of the side wall 9. Preferably, although not necessarily, the longitudinal edges and the free edges of the tongues of each spring may be held in place by grooves formed in the side walls of the cavity 7.

Typically, the cavity 2 is approximately 3/4 inch square (1.9 cm. square) and is of sufficient length to accommodate an average 1/4 inch (0.6 cm) diameter columns of 1 foot (30 cm) in length.

A column to be heated is placed in the block 1 by first removing the longitudinal wall 5 and then resting the column on the cradle formed by the interleaved tongues 8 of the springs 6 and 7 so that only the enlarged hexagonal ends of the column, which are provided for connection to other parts of the chromatograph apparatus, extend beyond the cradle. The lengths of the springs 6 and 7 may be adjusted by trimming to fit a column of a particular length.

The enlarged hexagonal ends of the column protrude from the main portion of the block 1 through the opening formed by removal of the longitudinal wall 5 and accordingly, as the wall 5 is replaced and secured or clamped in place, the wall 5 acts on the enlarged ends of the columns to press the column into the resilient cradle which thus supports the column and ensures good heat transfer between the block 1 and the column with a minimum temperature differential when the heating means carried by the block 1 are actuated. Alternative or additional resilient retaining means, in the form of a spring, may be provided on the longitudinal wall 5 to act directly on the main portion of the column to press it into the cradle as the longitudinal wall 5 is clamped or screwed into place.

Clearly, the resilient heat conducting means may take different forms, it merely being necessary to ensure contact between the block and the column at evenly spaced positions on the surface of the column to provide even heating of the column. Also, the resilient heat conducting means may be arranged so as to totally support and retain the column, without the requirement for the wall 5 and/or retaining means provided thereon to act to press the columns into the resilient heat conducting means.

Moreover, a plurality of cavities, preferably extending parallel to one another and each provided with resilient heat conducting means, may be provided in the heat conducting block 1 to allow a number of columns which have to be heated to the same temperature to be heated at the same time.

Although heating apparatus embodying the invention has been described above for use in heating a column of a column chromatogram, the apparatus is suitable for use where any member or article is to be heated by mounting in a heated heat conducting block.

CLAIMS

1. Heating apparatus comprising a heat conducting block (1) formed with a cavity (2) to accept a member (4) to be heated, means for heating the block (1) and resilient heat conducting means (3) in the cavity for resiliently supporting the member (4) to be heated in the cavity (2) the resilient heat conducting means (3) being adapted to contact the wall of the cavity (2) and the member (4) to be heated and serving, in use of the apparatus, to conduct heat from the block (1) to the member (4) to be heated.

2. Heating apparatus according to claim 1, wherein the resilient heat conducting means (3) are so formed as to contact the member (4) to be heated at evenly spaced portions on the surface of the member to ensure even heating.

3. Heating apparatus according to claim 1 or 2, wherein the resilient heat conducting means (3) form a resilient cradle for the member (4) to be heated and retaining means are associated with the resilient heat conducting means to press the member (4) to be heated into the cradle.

4. Heating apparatus according to claim 3, where a portion (5) of the wall of the cavity (2) is removable to form an opening in the cavity wall and the retaining means are provided on the removable portion of the cavity wall.

5. Heating apparatus according to claim 3, wherein the retaining means comprise a portion of the cavity wall (5) which is removable to form an opening in the cavity wall and which, in use of the apparatus, presses the member (4) to be heated into resilient cradle.

6. Heating apparatus according to claim 3, 4 or 5, wherein the resilient heat conducting means (3) comprise a pair of plate springs (6,7) having tongues (8) which interleave to form the resilient cradle.

7.      Heating apparatus according to claim 6, wherein the pair of plate springs (6, 7) are held in place in grooves formed in the cavity wall.

8.      Heating apparatus according to any preceding claim, wherein one or more further cavities (2) are formed in the heat conducting block (1) each further cavity being provided with resilient heat conducting means (3) for resiliently supporting and contacting a respective member (4) to be heated.

9.      Heating apparatus according to claim 8, wherein the cavities (2) are elongate and formed parallel to one another in the heat conducting block (1).

10.     Heating apparatus for a column chromatograph, comprising a heat conducting block (1) formed with an elongate cavity (2) to accept a column (4) of the chromatograph, means for heating the block and resilient heat conducting means (3) in the cavity (2) for resiliently supporting the column (4) in the cavity, the resilient heat conducting means (3) being adapted to contact the wall of the cavity and the column (4) and serving, in use of the apparatus, to conduct heat from the block to the column.

11.     Heating apparatus according to claim 10, wherein the resilient heat conducting means (3) are formed to contact the column (4) at evenly spaced positions on the surface of the column to ensure even heating.

12.     Heating apparatus according to claim 10 or 11, wherein the resilient heat conducting means (3) form a resilient cradle for the column (4) and reataining means are associated with the resilient heat conducting means to press the column (4) into the cradle.

13.      Heating apparatus according to claim 12, wherein a portion (5) of the wall of the cavity is removable to form an opening in the heat conducting block (1) and the retaining means are provided on the removable portion of the cavity wall.

14.      Heating apparatus according to claim 12, wherein the retaining means comprise a portion of the cavity wall (5) which is removable to form an opening in the heat conducting block (1) which, in use of the apparatus, presses on enlarged end portions of the column to press the column (4) into the resilient cradle.

15.      Heating apparatus according to claim 13 or 14, wherein, in use of the apparatus, the column (4) extends parallel to the removable portion (5) of the cavity wall.

16.      Heating apparatus according to claim 12, 13, 14 or 15, wherein the resilient heat conducting means (3) comprise a pair of plate springs (6, 7) having tongues (8) which interleave to form the resilient cradle.

17.      Heating apparatus according to claim 16, wherein, in use, the pair of plate springs (6, 7) extend along the length of the column (4) such that the whole length of the column is supported in the resilient cradle formed by the interleaved tongues (8) of the plate springs (6,7).

18.      Heating apparatus according to claim 16 or 17, wherein the pair of plate springs (6,7) are held in place in grooves formed in the cavity wall.

19.      Heating apparatus according to claim 16, 17 or 18, wherein the length of each of the or each pair of plate springs (6,7) is adjustable to accommodate columns (4) of different sizes.

20.     Heating apparatus according to any one of claims 10 to 19, wherein one or more further cavities (2) are formed in the heat conducting block (1), each further cavity being provided with resilient heat conducting means (3) for resiliently supporting and contacting a respective column (4) to be heated.

21.     Heating apparatus according to claim 20, wherein the cavities (2) are formed parallel to one another in the heating block (1).

22.     Heating apparatus according to any preceding claim, wherein means for heating the heat conducting block (1) are carried by the block.

23.     Heating apparatus for a column chromatograph substantially as hereinbefore described with reference to and as illustrated in the accompanying drawing.

24.     Any novel feature or combination of features described herein.

Fig.1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 335 255  (E.R.A.P.) <br><br> *Page 5; page 6, lines 1-11* | 1-4,10 -13 | G 01 N  31/08 |
| Y | FR-A-2 270 538  (SOCIETE INAFRANCE) <br><br> *Page 2* | 1,3-4, 10,12- 13 | |
| Y | US-A-3 429 176  (W.H.TOPHAM) <br> *Column  2,  lines 64-72; columns 3; column 4, lines 1-20* | 1,10 | |
| A | US-A-3 164 005  (M.R.BURNELL) <br><br> *Column  2, line 63-72; column 3, lines 1-48* | 1,4,10 ,13 | |
| | | | **TECHNICAL FIELDS SEARCHED (Int. Cl. ³)** |
| A | US-A-3 422 603  (M.W.REDMOND) <br> *Column 2, lines 64-71; column 3, lines 1-53* | 1,10 | G 01 N  31/08 |
| A | DE-A-2 400 389  (PHILIPS PATENTVERWALTUNG) <br> *Page  3,  lines  21-29;  page 4, lines 1-7* | 1,10 | |
| A | DE-A-1 598 445  (SIEMENS) <br> *Claim 1* | 1,10 | |

The present search report has been drawn up for all claims

| Place of search <br> THE HAGUE | Date of completion of the search <br> 14-02-1983 | Examiner <br> CALLEWAERT-HAEZEBROU |
|---|---|---|